# EUROPÄISCHE PATENTSCHRIFT

(11) **EP 3 590 803 B1**
(45) Veröffentlichungstag und Bekanntmachung des Hinweises auf die Patenterteilung: **02.08.2023**
(21) Anmeldenummer: 19179432.0
(22) Anmeldetag: 11.06.2019
(51) Int. Cl.: B62J 1/00, B62J 9/00

(54) **FAHRRADSATTEL**
BICYCLE SADDLE
SELLE DE BICYCLETTE

(30) Priorität: 03.07.2018 DE 202018003082 U
(43) Veröffentlichungstag der Anmeldung: 08.01.2020
(73) Patentinhaber: Ergon International GmbH, 56070 Koblenz (DE)
(72) Erfinder: Krause, Andreas, 56068 Koblenz (DE); Juckwer, Christine, 56073 Koblenz (DE)
(74) Vertreter: dompatent von Kreisler Selting Werner - Partnerschaft von Patent- und Rechtsanwälten mbB

(56) Entgegenhaltungen:
- WO-A1-2014/002047
- WO-A1-2015/059624
- DE-U1-202006 010 063
- DE-U1-202015 003 752
- DE-U1-202017 102 280
- GB-A- 434 147
- JP-U- S61 189 894
- US-A- 568 474
- US-A- 1 538 542
- US-A1- 2002 003 364
- US-B2- 8 801 093

## Beschreibung

Die Erfindung betrifft einen Fahrradsattel, insbesondere einen Männer-Fahrradsattel.

Fahrradsättel weisen eine insbesondere aus hartem Kunststoff hergestellte Sattelschale auf. Die Unterseite der Sattelschale ist mit einem Sattelgestell verbunden. Das Sattelgestell dient zur Verbindung des Sattels mit dem Sattelstützrohr. An einer Oberseite der Sattelschale ist ein aus einem Polstermaterial hergestelltes Polsterelement angeordnet. Dies ist üblicherweise von einer Deckschicht überspannt, die an der Unterseite der Sattelschale fixiert ist. Insbesondere zur Entlastung des Genitalbereichs sind Fahrradsättel bekannt, die in Längsrichtung eine Vertiefung im Polsterelement oder einen durchgehenden Schlitz aufweisen. Ein derartiger Schlitz beziehungsweise eine derartige Vertiefung verläuft somit bei montiertem Fahrradsattel in Fahrtrichtung, d. h. in Längsrichtung des Sattels.

Das Vorsehen von Vertiefungen im Polsterelement weist den Nachteil auf, dass sich hierin Regenwasser sammeln kann. Ferner weis eine Vertiefung im Polsterelement den Nachteil auf, dass das Polsterelement im Genitalbereich sehr dünn ist und insbesondere bei einer tiefen bzw. unteren Lenkerposition ein unangenehmer Druck auf den Genitalbereich erfolgt. Das Vorsehen von nach unten offenen durchgehenden Schlitzen weist den Nachteil auf, dass Spritzwasser durch den Schlitz hindurchdringen kann. Ferner weiß das Vorsehen eines derartigen Schlitzes den Nachteil auf, dass die Stabilität der Sattelschale geschwächt wird. Es wäre bei derartigen Sätteln daher erforderlich in der Sattelschale einen hohen Anteil an Glasfaserverstärkungen oder dergleichen vorzusehen, wodurch das Material der Sattelschale jedoch spröde wird.

Fahrradsättel mit sich in Längsrichtung erstreckenden Schlitzen sind beispielsweise aus DE 20 2015 003 752 sowie US 8,801,093 bekannt. Aufgabe der Erfindung ist es einen verbesserten Fahrradsattel zu schaffen.

Die Lösung der Aufgabe erfolgt erfindungsgemäß durch einen Fahrradsattel gemäß Anspruch 1.

Die Merkmale des Oberbegriffs von Anspruch 1 sind in US 568,474 A offenbart.

Der erfindungsgemäße Fahrradsattel weist in dem Polsterelement eine in Längsrichtung des Fahrradsattels verlaufende Vertiefung auf. Die Tiefe der Vertiefung nimmt erfindungsgemäß in Richtung einer Sattelrückseite zu. Die Tiefe nimmt somit entgegen der Fahrtrichtung zu. Bei montiertem Fahrradsattel weist die Vertiefung somit eine entgegen der Fahrtrichtung weisendes Gefälle auf. Bei dem erfindungsgemäßen Fahrradsattel ist im sattelrückseitigen Bereich der Vertiefung in der Sattelschale eine Öffnung angeordnet. Im montierten Zustand ist diese Öffnung vorzugsweise im tiefsten Punkt der Vertiefung angeordnet. In dieser besonders bevorzugten Ausführungsform der Erfindung ist die Öffnung der Sattelschale, die mit der Vertiefung in Verbindung steht, somit im hinteren beziehungsweise sattelrückseitigen Bereich, insbesondere am sattelrückseitigen Ende der Vertiefung angeordnet. Insbesondere endet die Vertiefung in der Öffnung. Ferner kann die Vertiefung auch einen im sattelrückseitigen Bereich vorgesehen Teil aufweisen, der in Fahrtrichtung ein Gefälle aufweist. In Seitenansicht ist die Vertiefung daher beispielsweise V-förmig.

Das Vorsehen einer Vertiefung anstelle eines Schlitzes hat zunächst den Vorteil, dass kein Spritzwasser durch den Schlitz gelangen kann. Ferner hat eine Vertiefung mit zunehmender Tiefe entgegen der Fahrtrichtung den Vorteil, dass hierdurch eine bessere Entlastung des Genitalbereichs möglich ist. Bei der besonders bevorzugten Ausführungsform der Erfindungen, die im sattelrückseitigen Bereich der Vertiefung eine Öffnung aufweist, besteht der weitere Vorteil, dass Feuchtigkeit wie Regenwasser aus der Vertiefung abfließen kann. Ferner ist es bei der erfindungsgemäßen Ausführungsform eines Polsterelements mit Vertiefung möglich, eine im Wesentlichen durchgehende bzw. vollflächige Sattelschale vorzusehen. Hierdurch kann eine Sattelschale mit hoher Festigkeit bei gleichzeitiger gewünschter Flexibilität realisiert werden. Ein Versteifen der Sattelschale mit einem hohen Glasfaseranteil, wie es bei Sätteln mit einem Längsschlitz in der Sattelschale erforderlich ist, ist nicht notwendig.

Vorzugsweise erstreckt sich die Vertiefung ausgehend von einem Bereich einer Sattelspitze bis in den Sitzbereich eines Sattels.

Es ist des Weiteren bevorzugt, dass die Vertiefung in Längsrichtung stufenfrei ausgebildet ist. Die Vertiefung beginnt somit insbesondere im Bereich der Sattelspitze stufenfrei, so dass die Vertiefung von einer Oberseite des Polsterelements ausgeht. Lediglich im Endbereich der Vertiefung, das heißt in dem sattelrückseitigen Bereich der Vertiefung ist eine Stufe vorgesehen. Diese ist insbesondere im Sitzbereich des Sattels angeordnet.

Des Weiteren ist es bevorzugt, dass die Vertiefung eine maximale Tiefe gegenüber einer Polsteroberseite von mindestens 5 Millimeter, insbesondere mindestens 7 Millimeter und besonders bevorzugt mindestens 9 Millimeter aufweist. Die Breite der Vertiefung, das heißt die Abmessung der Vertiefung quer zur Längsrichtung nimmt vorzugsweise in Längsrichtung zu. Die Breite der Vertiefung ist somit vorzugsweise im Bereich der Sattelspitze geringer als im Sitzbereich. Die Breite der Vertiefung liegt vorzugsweise im Bereich von 5 - 30 Millimeter, wobei die Vertiefung im vorderen Bereich vorzugsweise eine Breite von 5 - 10 Millimeter und im Sitzbereich vorzugsweise eine Breite von 15 - 30 Millimeter aufweist.

Bei der besonders bevorzugten Ausführungsform des erfindungsgemäßen Sattels, bei der die Sattelschale eine mit der Vertiefung in Verbindung stehende Öffnung aufweist, erstreckt sich die Öffnung vorzugsweise im Wesentlichen über die gesamte Breite der Vertiefung. In Längsrichtung weist die Öffnung vorzugsweise Öffnungsabmessungen von 5 - 10 Millimeter auf. Aufgrund der verhältnismäßig kleinen Öffnung ist die Gefahr des Eindringens von Spritzwasser gering.

In einer bevorzugten Weiterbildung weist die Sattelschale im Bereich der Öffnung einen Kragen auf. Dieser weist in die Öffnung hinein und ist vorzugsweise vollständig umlaufend. Der Kragen dient zur Ausbildung eines definierten Abschlusses für ein auf der Oberseite der Sattelschale vorgesehenes Polsterelement.

Bei einer besonders bevorzugten Weiterbildung der Erfindung weist die Sattelschale an einer Unterseite eine in Richtung der Vertiefung verlaufende Ausbuchtung auf. Insbesondere erstreckt sich die Ausbuchtung über die gesamte Länge der Vertiefung. Hierdurch ist es möglich eine Vertiefung mit großer Tiefe zu realisieren, so dass eine gute Entlastung des Genitalbereichs gewährleistet ist. Ferner hat dies den Vorteil, dass in dem Grund, das heißt an der Unterseite der Vertiefung ein Polsterelement vorgesehen werden kann, so dass auch dieser Bereich noch gepolstert ist. Die somit bei dieser Ausführungsform mögliche Polsterung in der Vertiefung hat den Vorteil, dass auch bei einer tiefen bzw. unteren Lenkerposition eine gute Druckverteilung möglich ist und somit auch in dieser Position eine bevorzugte Polsterung bzw. Dämpfung im Genitalbereich realisiert werden kann. Das Vorsehen einer Ausbuchtung in Längsrichtung der Sattelschale in Verbindung mit einer Vertiefung im Polsterelement stellt eine selbstständige Erfindung dar, die insbesondere unabhängig von der Ausgestaltung insbesondere der Neigung der Vertiefung ist. Ferner ist diese Erfindung unabhängig vom Vorsehen einer Öffnung in der Sattelschale sowie auch vom Vorsehen eines Halteelements. In bevorzugter Weiterbildung dieser Erfindung sind diese Elemente jedoch zumindest teilweise vorgesehen.

Des Weiteren ist es bevorzugt, dass die Sattelschale im Bereich der Ausbuchtung eine geringere Dicke bzw. eine geringere Wandstärke aufweist als im übrigen Bereich. Hierdurch kann die Flexibilität verbessert werden. Insbesondere weist die Sattelschale im Bereich der Ausbuchtung eine Dicke von weniger als 2,5 Millimetern, insbesondere weniger als 2 Millimetern und besonders bevorzugt eine Wandstärke im Bereich von 1,5 Millimetern auf. Insbesondere in an die Ausbuchtung angrenzenden Bereichen weist die Sattelschale vorzugsweise eine Dicke von mehr als 2 Millimetern auf, wobei insbesondere eine Dicke im Bereich von 2,5 Millimetern bevorzugt ist.

Erfindungsgemäß weist die Öffnung in einem Randbereich ein Halteelement auf. Dieses Halteelement dient insbesondere zur Fixierung einer Satteltasche, einer kleinen Werkzeugbox, eines Rücklichts, einer Halterung für einen Ersatzschlauch oder auch zur Fixierung eines Spritzschutzes. Dieses Merkmal stellt eine vom Gefälle der Vertiefung und/oder dem Vorsehen einer Ausbuchtung in der Sattelschale unabhängige Erfindung dar. In bevorzugter Weiterbildung weist ein Sattel mit einem erfindungsgemäßen Halteelement zusätzlich zumindest Teil der vorstehend beschriebenen Merkmale betreffend die Vertiefung und/oder die Ausbuchtung auf.

Vorzugsweise ist das Halteelement durch die Sattelschale ausgebildet, wobei es bevorzugt ist, dass das Halteelement in Richtung des Polsterelementes ragt.

Beispielsweise kann das Halteelement, Rastelement und dergleichen aufweisen, so dass beispielsweise eine Satteltasche auf einfache Weise fixiert werden kann.

Vorzugsweise ist das Halteelement an einer Vorderseite der Öffnung angeordnet. Hierbei ist die Vorderseite der Öffnung diejenige in Fahrtrichtung weisende Seite der Öffnung. Dies hat den Vorteil, dass beispielweise eine Satteltasche oder dergleichen auf einfache Weise in Fahrtrichtung, das heißt von der Rückseite des Sattels aus fixiert werden kann.

Des Weiteren ist es bevorzugt, dass die Vorderseite der Öffnung gegenüber einer gegenüberliegenden Rückseite der Öffnung einen Höhenversatz aufweist. Insbesondere ist die Rückseite im montierten Zustand höher als die Vorderseite. Dies hat den Vorteil, dass die das Halteelement aufweisende beziehungsweise ausbildende Vorderseite der Öffnung von der Sattelrückseite auf einfache Weise gut zugänglich ist.

Des Weiteren ist es möglich ein Befestigungselement an der Sattelschale vorzusehen. Das Befestigungselement ist insbesondere am rückwärtigen bzw. entgegen der Fahrtrichtung weisenden hinteren Randbereich der Sattelschale vorgesehen. Es handelt sich hierbei insbesondere um den Bereich zwischen den beiden Befestigungspunkten des Sattelgestells im rückwärtigen Bereich der Sattelschale. Der Randbereich der Sattelschale kann in diesem Bereich etwas verdickt ausgebildet sein, so dass, beispielsweise mit Hilfe einer Schraube fixiert, ein Befestigungselement vorgesehen sein kann. An diesem Befestigungselement kann beispielsweise mit Hilfe von Rastverbindungen eine Satteltasche, eine Werkzeugbox, ein Rücklicht, ein Spritzschutz oder dergleichen fixiert werden. Vorzugsweise erfolgt die Befestigung des zusätzlichen Bauteils an dem Befestigungselement durch eine Rastverbindung, so dass das entsprechende Element wie eine Satteltasche vor der Rückseite einfach eingeschoben und durch Rasten befestigt werden kann. Durch ein entsprechendes übliches Lösen der Rastverbinduno kann die Tasche auf einfache Weise wieder gelöst werden.

Insbesondere kann das Befestigungselement unabhängig oder zusätzlich zu dem Halteelement vorgesehen sein. Bei dem Versehen des Befestigungselements in Verbindung mit dem Halteelement ist es insbesondere möglich, eine Satteltasche oder dergleichen an zwei Punkten mit der Sattelschale zu verbinden, nämlich an dem Halteelement und an dem Befestigungselement. Hierdurch ist es einerseits möglich, schwerere Satteltaschen, Werkzeugboxen und dergleichen zu befestigen und andererseits weißt eine Befestigung an zwei Punkten den Vorteil auf, dass eine Lagedefinition verbessert ist. Diese ist insbesondere beim Anbringen eines Spritzschutzes vorteilhaft.

Bei einer besonders bevorzugten Weiterbildung der Erfindung weist die Sattelschale an einer Unterseite eine in Richtung der Vertiefung verlaufende Ausbuchtung auf. Insbesondere erstreckt sich die Ausbuchtung über die gesamte Länge der Vertiefung. Hierdurch ist es möglich eine Vertiefung mit großer Tiefe zu realisieren, so dass eine gute Entlastung des Genitalbereichs gewährleistet ist. Ferner hat dies den Vorteil, dass in dem Grund, das heißt an der Unterseite der Vertiefung ein Polsterelement vorgesehen werden kann, so dass auch dieser Bereich noch gepolstert ist.

Nachfolgend wird die Erfindung an Hand einer bevorzugten Ausführungsform unter Bezugnahme auf die anliegenden Zeichnungen näher erläutert.

Es zeigen:
- Fig. 1: eine schematische Draufsicht eines erfindungsgemäßen Fahrradsattels,
- Fig. 2: eine schematische Schnittansicht entlang einer Linie II/II in Figur 1,
- Fig. 3: eine schematische Schnittansicht entlang der Linie III/III in Figur 1und
- Fig. 4: eine schematische Schnittansicht in Längsrichtung der Sattelschale.

Die in den Figuren dargestellte bevorzugte Ausführungsform eines erfindungsgemäßen Fahrradsattels weist eine Sattelschale 10 auf. An einer Unterseite 12 der Sattelschale 10 ist ein Sattelgestell angeordnet, das im dargestellten Ausführungsbeispiel zwei Sattelstreben 14 aufweist. Die Enden der Streben sind einerseits im Bereich einer Sattelspitze 16 und andererseits im Bereich einer Rückseite 18 mit der Sattelschale 10 verbunden.

Auf einer Oberseite 20 der Sattelschale ist ein Polsterelement 22 angeordnet. Das Polsterelement 22 ist von einer nicht gesondert dargestellten Deckschicht überspannt, die im Randbereich an der Unterseite 12 mit der Sattelschale 10 verbunden ist.

In Längsrichtung 24, das heißt im montierten Zustand in Fahrtrichtung erstreckt sich in dem Sattelpolster 22 eine Vertiefung 26. Die Vertiefung 26 erstreckt sich ausgehend von dem Bereich 16 der Sattelspitze in einen Sitzbereich 28. Eine Unterseite 30 der Vertiefung 26 bzw. der Grund der Vertiefung 26 ist derart ausgebildet, dass die Tiefe der Vertiefung 26 entgegen der Fahrtrichtung 24, das heißt in Richtung der Sattelrückseite 18 zunimmt. Im Bereich der Sattelspitze, in dem bei der dargestellten Ausführungsform die Vertiefung 26 beginnt, ist die Tiefe zunächst 0 Millimeter und nimmt sodann bis zu einem hinteren Bereich 32 auf eine Tiefe von ca. 10 Millimeter gegenüber einer benachbarten Polsteroberseite 33 zu.

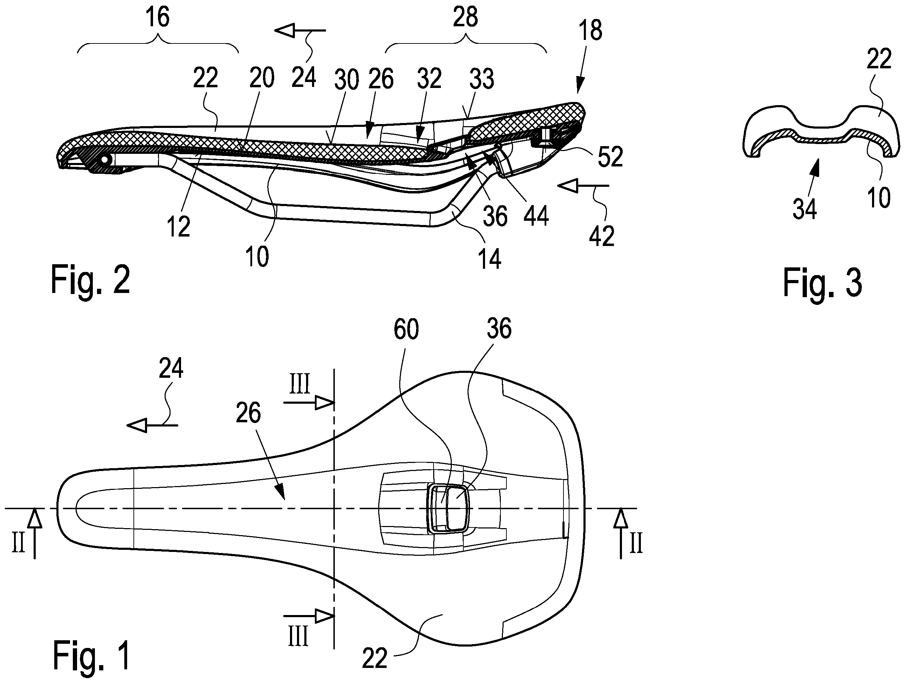

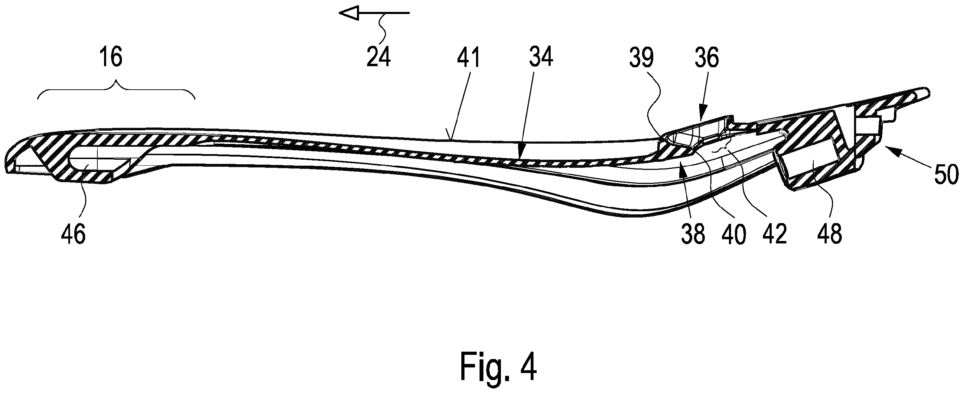

Über die gesamte Länge der Vertiefung 26 weist in der dargestellten Ausführungsform die Sattelschale 10 an der Unterseite 12 eine Ausbuchtung 34 (Fig. 3 und 4) auf. Hierdurch ist es möglich auch in der Vertiefung 26 eine ausreichende Dicke des Polsterelements 32 vorzusehen.

Bei der besonders bevorzugten Ausführungsform der Erfindung weist die Sattelschale eine Öffnung 36 auf. Die Öffnung 36 ist im rückseitigen Bereich, insbesondere am Ende der Vertiefung 26 angeordnet. Die Vertiefung 26 endet somit im Verlauf entgegen der Fahrtrichtung in der Öffnung 36. Die Öffnung 36 in der Sattelschale 10 steht somit in unmittelbarer Verbindung zu der Vertiefung 26.

Im dargestellten Ausführungsbeispiel beginnt bezogen auf die Fahrtrichtung 24 die Ausbuchtung 34 im Bereich der Sattelspitze 16. In diesem Bereich beginnt die Ausbuchtung stufenfrei und weist somit gegenüber dem neben der Ausbuchtung angeordneten Teil der Sattelschale 10 einen Unterschied von 0 Millimetern auf. Entgegen der Fahrtrichtung 24 nimmt wie insbesondere wie in Figur 4 sichtbar, der Höhenunterschied zu dem Bereich 41 der Sattelschale 10 unmittelbar neben der Ausbuchtung 34 deutlich zu.

In einem vorderen Randbereich 38 weist die Sattelschale eine Verdickung bzw. einen Rand 39 auf. Dieser dient insbesondere zur Aufnahme des Sattelpolsters 22, so dass ein insbesondere sauberer und kantenfreier Randbereich des Polsters realisiert werden kann. Hierdurch ist ein Ablösen oder Beschädigen des Polsters in diesem Bereich vermieden. Insbesondere ist der Rand 39 umlaufend ausgebildet und umgibt die Öffnung 36 vollständig. Des Weiteren weist die Sattelschale 10 im Bereich der Sattelspitze 16 sowie im Bereich der Sattelrückseite 28 Ausnehmungen 46, 48 zur Aufnahme des Sattelgestells 14 auf.

Im Bereich der Ausbuchtung 34 weist die Sattelschale 10 vorzugsweise eine geringere Dicke bzw. eine geringere Wandstärke auf als in ihrem angrenzenden Bereich 41 (Fig. 3).

In dem vorderen Randbereich 38 (Fig. 4) weist die Öffnung 36 ein Halteelement 40 auf. Das Halteelement 40 ist insbesondere von einer Rückseite des Sattels auf Grund des Höhenunterschieds 42 gut zugänglich und dient beispielsweise zur Befestigung einer Satteltasche, einer kleinen Werkzeugbox, eines Rücklichts, einer Halterung für einen Ersatzschlauch, einem Spritzschutz oder dergleichen.

Zusätzlich kann in einem rückwertigen Bereich 50 insbesondere zwischen den beiden Aufnahmen 48 für das Sattelgestell 14 ein (nicht dargestelltes) Befestigungselement vorgesehen sein. Das Befestigungselement kann insbesondere mittels einer Schraube 52 (Fig. 2) befestigt werden. Bei dem Befestigungselement, bei dem sie insbesondere um ein Rastmittel aufweisendes Befestigungselement handelt, dient zur Aufnahme einer Satteltasche, einer Werkzeugbox, eines Rücklichts, eines Spritzschutzes oder dergleichen. Insbesondere kann ein derartiges Befestigungselement mit dem Halteelement 40 zusammenwirken, so dass auch schwerere Satteltaschen befestigt oder beispielsweise ein Spritzschutz gut ausgerichtet werden kann.

In dem dargestellten montierten Zustand ist die Rückseite 44 höher als die Vorderseite 38. Hierdurch ist die Zugänglichkeit des Halteelements 40 verbessert. Insbesondere aufgrund des Höhenversatzes 42 kann bei einer rückwärtigen Betrachtung des Sattels die Ausgestaltung der Sattelschale mit einer in Längsrichtung verlaufenden Ausbuchtung 34 gut erkannt werden. Der technische Vorteil der entsprechenden Ausbuchtung ist somit für den Benutzer sichtbar.

## Patentansprüche

1. Fahrradsattel mit
einer mit einem Sattelgestell (14) verbundene Sattelschale (10), einem auf einer Oberseite (20) der Sattelschale (10) angeordneten Polsterelement (22) und
einer in dem Polsterelement (22) in Längsrichtung (24) des Fahrradsattels verlaufenden Vertiefung (26), die in Richtung einer Sattelrückseite (18) zunimmt,
wobei die Sattelschale (10) eine mit der Vertiefung (26) in Verbindung stehende Öffnung (36) aufweist,
**dadurch gekennzeichnet, dass**
in einem Randbereich (38) der Öffnung (36) ein Halteelement (40) insbesondere zur Fixierung einer Satteltasche vorgesehen ist,
wobei das Halteelement (40) durch die Sattelschale (10) ausgebildet ist.

2. Fahrradsattel nach Anspruch 1, **dadurch gekennzeichnet, dass** sich die Vertiefung (26) vom Bereich einer Sattelspitze (16) bis in einen Sitzbereich (28) erstreckt.

3. Fahrradsattel nach Anspruch 1 oder 2, **dadurch gekennzeichnet, dass** die Vertiefung (26) in Längsrichtung (24) stufenfrei ausgebildet ist.

4. Fahrradsattel nach einem der Ansprüche 1 - 3, **dadurch gekennzeichnet, dass** die Vertiefung gegenüber einer Polsteroberseite (33) eine maximale Tiefe von mindestens 5 Millimeter, insbesondere mindestens 7 Millimeter und besonders bevorzugt mindestens 9 Millimeter aufweist.

5. Fahrradsattel nach einem der Ansprüche 1 - 4, **dadurch gekennzeichnet, dass** die Öffnung (36) im sattelrückseitigen Bereich der Vertiefung (26) angeordnet ist.

6. Fahrradsattel nach Anspruch 5, **dadurch gekennzeichnet, dass** die Öffnung (36) einen insbesondere umlaufenden in Richtung des Sattelpolsters (22) verlaufenden Kragen (39) aufweist.

7. Fahrradsattel nach einem der Ansprüche 1 - 6, **dadurch gekennzeichnet, dass** das Halteelement (40) in Richtung des Polsterelements (22) ragt.

8. Fahrradsattel nach einem der Ansprüche 1 - 7, **dadurch gekennzeichnet, dass** das Haltelement (40) an einer Vorderseite (38) der Öffnung (36) angeordnet ist.

9. Fahrradsattel nach Anspruch 8, **dadurch gekennzeichnet, dass** die Vorderseite (38) der Öffnung (36) zu einer Rückseite (44) der Öffnung (36) einen Höhenversatz aufweist.

10. Fahrradsattel nach Anspruch 1 - 9, **dadurch gekennzeichnet, dass** die Sattelschale (10) an einer Unterseite (12) eine in Richtung der Vertiefung (26) verlaufende Ausbuchtung (34) aufweist.

## Claims

1. A bicycle saddle comprising
a saddle shell (10) connected with a saddle frame (14),
a padding element (22) disposed on an upper side (20) of the saddle shell (10), and
a depression (26) extending in the padding element (22) in the longitudinal direction (24) of the bicycle saddle, the depression increasing towards the rear (18) of the saddle,
the saddle shell (10) comprising an opening (36) in contact with the depression (26),
**characterized in that**
a holding element (40), in particular for fixing a saddlebag, is provided in an edge region (38) of the opening (36),
the holding element (40) being formed by the saddle shell (10).

2. The bicycle saddle according to claim 1, **characterized in that** the depression (26) extends from the area of a saddle tip (16) to a seat area (28).

3. The bicycle saddle according to claim 1 or 2, **characterized in that** the depression (26) is of a stepless configuration in the longitudinal direction (24).

4. The bicycle saddle according to any one of claims 1-3, **characterized in that** the depression has a maximum depth with respect to an upper side (33) of the padding of at least 5 millimeters, in particular at least 7 millimeters, and particularly preferred at least 9 millimeters.

5. The bicycle saddle according to any one of claims 1-4, **characterized in that** the opening (36) is disposed in the area of the depression (26) at the rear of the saddle.

6. The bicycle saddle according to claim 5, **characterized in that** the opening (36) comprises a collar (39) extending in particular circumferentially in the direction of the saddle padding (22).

7. The bicycle saddle according to any one of claims 1-6, **characterized in that** the holding element (40) protrudes towards the padding element (22).

8. The bicycle saddle according to any one of claims 1-7, **characterized in that** the holding element (40) is disposed on a front side (38) of the opening (36).

9. The bicycle saddle according to claim 8, **characterized in that** the front side (38) of the opening (36) has a height offset to a rear side (44) of the opening (36).

10. The bicycle saddle according to claims 1-9, **characterized in that** the saddle shell (10) comprises on a lower side (12) an indentation (34) extending towards the depression (26).

## Revendications

1. Selle de bicyclette dotée
d'une coque de selle (10) reliée à un rail de selle (14),
d'un élément de rembourrage (22) disposé sur une face supérieure (20) de la coque de selle (10) et
d'une dépression (26) dans l'élément de rembourrage (22), s'étendant dans la direction longitudinale (24) de la selle de bicyclette, laquelle s'agrandit vers une face arrière de selle (18),
dans laquelle la coque de selle (10) comporte une ouverture (36) en liaison avec la dépression (26),
**caractérisée en ce qu'**un élément de maintien (40) est prévu dans une zone de bord (38) de l'ouverture (36), en particulier pour fixer une sacoche de selle,
dans laquelle l'élément de maintien (40) est réalisé par la coque de selle (10).

2. Selle de bicyclette selon la revendication 1, **caractérisée en ce que** la dépression (26) s'étend depuis la zone d'un bec de selle (16) jusque dans une zone d'assise (28).

3. Selle de bicyclette selon la revendication 1 ou 2, **caractérisée en ce que** la dépression (26) est réalisée sans degrés dans la direction longitudinale (24).

4. Selle de bicyclette selon l'une des revendications 1-3, **caractérisée en ce que** la dépression présente par rapport à une face supérieure de rembourrage (33) une profondeur maximale d'au moins 5 millimètres, en particulier d'au moins 7 millimètres et tout particulièrement préféré d'au moins 9 millimètres.

5. Selle de bicyclette selon l'une des revendications 1-4, **caractérisée en ce que** l'ouverture (36) est disposée dans la zone côté arrière de selle de la dépression (26).

6. Selle de bicyclette selon la revendication 5, **caractérisée en ce que** l'ouverture (36) présente une collerette (39) périphérique en particulier en direction du rembourrage de selle (22).

7. Selle de bicyclette selon l'une des revendications 1-6, **caractérisée en ce que** l'élément de maintien (40) fait saillie en direction de l'élément de rembourrage (22).

8. Selle de bicyclette selon l'une des revendications 1-7, **caractérisée en ce que** l'élément de maintien (40) est disposé sur une face avant de l'ouverture (36).

9. Selle de bicyclette selon la revendication 8, **caractérisée en ce que** la face avant (38) de l'ouverture (36) présente un décalage de hauteur par rapport à une face arrière (44) de l'ouverture (36).

10. Selle de bicyclette selon la revendication 1-9, **caractérisée en ce que** la coque de selle (10) présente sur une face inférieure (12) un renflement (34) s'étendant en direction de la dépression (26).
